# EUROPEAN PATENT SPECIFICATION

(11) **EP 3 117 252 B1**
(45) Date of publication and mention of the grant of the patent: **04.01.2023**
(21) Application number: 15717781.7
(22) Date of filing: 10.04.2015
(51) Int. Cl.: G02B 6/30

(54) **SUSPENDED RIDGE OXIDE WAVEGUIDE**
WELLENLEITER MIT SUSPENDIERTEM STARREM OXID
GUIDE D'ONDES À OXYDE A ARÊTE SUSPENDUE

(30) Priority: 11.04.2014 US 201461978361 P
(43) Date of publication of application: 18.01.2017
(73) Proprietor: Huawei Technologies Co., Ltd., Longgang District Shenzhen, Guangdong 518129 (CN)
(72) Inventor: XU, Qianfan, Shezhen, Guandong 518129 (CN); SHEN, Xiao, San Bruno, California 94066 (US)
(74) Representative: Körber, Martin Hans
(86) International application number: PCT/US2015/025323
(87) International publication number: WO 2015/157645

(56) References cited:
- WO-A1-2011/078789
- WO-A2-02/31548
- US-A1- 2012 076 465
- US-B1- 8 442 368
- MICHAEL WOOD ET AL: "Compact cantilever couplers for low-loss fiber coupling to silicon photonic integrated circuits", OPTICS EXPRESS, vol. 20, no. 1, 2 January 2012 (2012-01-02), page 164, XP55103061, DOI: 10.1364/OE.20.000164
- PENG SUN ET AL: "Cantilever couplers for intra-chip coupling to silicon photonic integrated circuits", OPTICS EXPRESS, vol. 17, no. 6, 16 March 2009 (2009-03-16) , page 4565, XP055197290, ISSN: 1094-4087, DOI: 10.1364/OE.17.004565
- MICHAEL WOOD ET AL: "Compact silicon strip waveguide cantilever couplers for low-loss and broadband fiber-to-chip coupling", LASERS AND ELECTRO-OPTICS (CLEO), 2012 CONFERENCE ON, IEEE, 6 May 2012 (2012-05-06), pages 1-2, XP032246168, ISBN: 978-1-4673-1839-6

## Description

### BACKGROUND

Silicon (Si) photonic devices may refer to photonic devices that use silicon as an optical medium in a chip. Silicon photonic devices may operate in infrared wavelengths employed by fiber optic telecommunication systems. Silicon may lie on top of a layer of silicon dioxide (SiO₂), or silica, and function as a silicon-on-insulator (SOI). Silicon photonic devices may be fabricated by employing industry standard semiconductor fabrication techniques.

Since silicon is commonly used as a substrate for integrated circuits, hybrid devices comprising both optical and electronic components may be integrated onto a single chip. Such hybrid devices may provide for electrical data operations, but also provide for optical interconnects that may allow for faster data transfer between and within chips. As a result, there is an increased interest in silicon photonics.

WO 02/31548 A2 discloses an optical component. The component includes a base having a pocket and a light transmitting medium having a ridge. The ridge defines a portion of a light signal carrying region in the light transmitting medium. The light transmitting medium is positioned adjacent to the base such that the ridge extends into the pocket.

### SUMMARY

The present invention is defined in the appended independent claims. Further implementations are disclosed in the appended dependent claims.

In one embodiment, the disclosure includes a waveguide comprising a single-mode optical core configured to carry an optical signal between an inversely tapered waveguide and an optical fiber, wherein the core extends longitudinally along an axis of optical signal propagation between the inversely tapered waveguide and the optical fiber, wherein a refractive index of the core is lower than a refractive index of the inversely tapered waveguide, and an air cladding disposed adjacent to the core along the axis of optical signal propagation.

In another embodiment, the disclosure includes a method comprising introducing an optical signal into an inversely tapered Si waveguide, passing the optical signal from the inversely tapered Si waveguide to a single-mode waveguide comprising a core and an air cladding surrounding the core, wherein a refractive index of the core is lower than a refractive index of the inversely tapered waveguide, and forwarding the optical signal from the single-mode waveguide towards an optical fiber, wherein the single-mode waveguide comprises a larger optical mode than the inversely tapered Si waveguide, and wherein the optical mode of the single-mode waveguide is compatible with an optical mode of the optical fiber.

In yet another embodiment, the disclosure includes an optical device, comprising a substrate, a single-mode waveguide disposed on the substrate, wherein the single-mode waveguide comprises a core and an air cladding surrounding the core, wherein the single-mode waveguide comprises a first end and a second end opposite to the first end along an axis of optical signal propagation, and wherein the first end is configured to couple to a single-mode fiber (SMF), and an inversely tapered waveguide disposed within a portion of the core of the single-mode waveguide, wherein the inversely tapered waveguide extends from the second end toward the first end with decreasing widths, and wherein the inversely tapered waveguide is aligned with the single-mode waveguide along the axis of optical signal propagation to provide an optical path between the inversely tapered waveguide and the optical fiber, wherein a refractive index of the core is lower than a refractive index of the inversely tapered waveguide.

These and other features will be more clearly understood from the following detailed description taken in conjunction with the accompanying drawings and claims.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.
FIG. 1 is a top view of a multi-mode suspended channel waveguide according to a comparative example.
FIG. 2 is a graph illustrating an optical field distribution of a multi-mode suspended channel waveguide according to a comparative example.
FIGS. 3A-D illustrate an embodiment of a single-mode suspended ridge waveguide.
FIG. 4 is a schematic diagram illustrating an embodiment of an optical field distribution for a single-mode suspended ridge waveguide.
FIG. 5 is a graph illustrating an embodiment of a cross-sectional view of an electric (E)-field distribution of a single-mode ridge waveguide in a transverse electric (TE) mode.
FIG. 6 is a graph illustrating an embodiment of a top-view of an E-field distribution of a single-mode ridge waveguide in a TE mode.
FIG. 7 is a graph illustrating an embodiment of a cross-sectional view of an E-field distribution of a single-mode ridge waveguide in a transverse magnetic (TM) mode.
FIG. 8 is a graph illustrating an embodiment of a top-view of an E-field distribution of a single-mode ridge waveguide in a TM mode.
FIG. 9 is a cross-sectional view of an embodiment of an optical device comprising a single-mode suspended ridge waveguide.
FIG. 10 is a flowchart of an embodiment of an optical edge coupling method.

### DETAILED DESCRIPTION

It should be understood at the outset that, although an illustrative implementation of one or more embodiments are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims.

Efficient coupling in and out of silicon photonics is challenging due to a large mismatch between a highly-confined Si waveguide mode and an optical fiber mode or a free-space beam (e.g., Gaussian beam) mode. For example, a highly confined Si waveguide may comprise a cross section in a submicron size range that is less than one micrometer (µm), while an SMF may comprise a cross section that is tens of µm. As such, the Si waveguide comprises an optical mode that is about one order of magnitude smaller than an optical fiber mode. Several optical mode conversion techniques are based on the employment of inverse tapers with overlay. An inverse taper is a waveguide that comprises a width that reduces significantly in a direction along an optical path. For example, Vilson R. Almeida, et al., "Nanotaper for compact mode conversion," Optics Letters, Vol. 28, No. 15, August 1, 2003, employs an inverse taper comprising a silicon waveguide core or a silicon nitride waveguide core surrounded by a lowerrefractive-index cladding. The cladding material forms another layer of multi-mode waveguide enclosing the inverse taper to confine the optical mode with a larger mode size. Alternatively, Qing Fang, et al., "Suspended optical fiber-to-waveguide mode size converter for Silicon photonics," OPTICS EXPRESS, Vol. 18, No. 8, 2010 and Long Chen, et al., "Low-Loss and Broadband Cantilever Couplers Between Standard Cleaved Fibers and High-Index-Contrast Si3N4 or Si Waveguides," IEEE Photonics Technology Letters, Vol. 22, No. 23, pp. 1744-46, 2010, employ a suspended multi-mode silica channel waveguide surrounded by air to provide optical mode conversions. However, the performance of some of these techniques is limited by higher-order modes interference.

Disclosed herein are various embodiments for providing optical edge coupling between an optical fiber and a highly-confined inverse taper waveguide on a silicon photonics platform by employing a single-mode suspended ridge waveguide that encloses the inverse taper waveguide and couples to the optical fiber. A single-mode waveguide refers to a waveguide that guides only the fundamental mode of an optical signal at an operational wavelength in each polarization (e.g., TE mode and TM mode). The waveguide comprises an SiO₂ core and air cladding surrounding the core. The core comprises a ridge structure that extends longitudinally along an axis of optical signal propagation. For example, the ridge structure is formed by a ridge disposed on a slab. The dimensions of the ridge and the slab are designed to provide single-mode optical signal propagation along the ridge. By designing the waveguide to be single-mode instead of multi-mode, the interference and/or coupling from higher-order modes may be avoided or reduced. Thus, the coupling efficiency may be improved when compared to a multi-mode channel waveguide. In an embodiment, a vertical height ratio between the height of the ridge and the height of the slab at which the ridge is located is configured to range between about (e.g., ±10 percent) 1.5 to about 5 in order to maintain single-mode optical signal propagation. In an embodiment, the slab comprises a base portion positioned between two step-up portions that extend longitudinally. The ridge is located at about a middle portion of the base portion and each step-up portion is positioned at a distance away from an edge of the ridge, forming an air-gap between the ridge and the step-up portions. The air-gap corresponds to the air cladding. The separation distance is configured to be at least about 1 µm so that the step-up portion of the slab may not optically interfere with an optical signal that propagates along the ridge. In an embodiment, air holes or air cavities are formed along the step-up portions and/or the base portion of the slab via undercut in order to suspend the waveguide in air. In another embodiment, the waveguide is disposed on a substrate and a portion of the substrate adjacent to the waveguide is removed or etched away in order to suspend the waveguide in air. By suspending the waveguide in air, which comprises a low refractive index, the waveguide may provide a higher coupling efficiency. To provide optical coupling, the disclosed embodiments employ an Si inverse taper disposed within the SiO₂ core. For example, the SiO₂ core comprises a larger optical mode size than the Si inverse taper. As such, when an optical signal is introduced into the inverse taper, the optical mode of the optical signal may be gradually transferred from the Si inverse taper to the SiO₂ core as the widths of the Si inverse taper narrows, thus providing optical mode conversion.

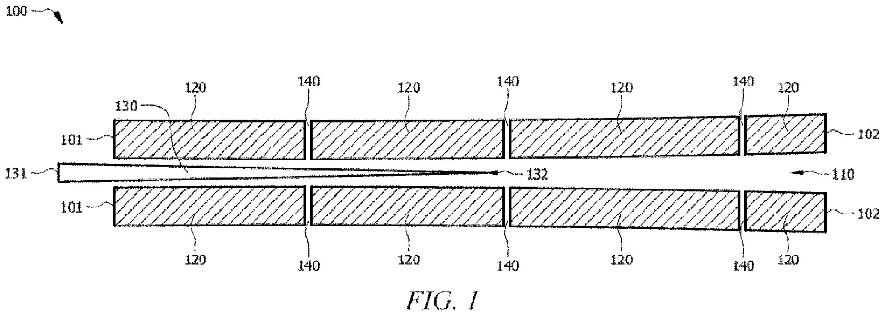

FIG. 1 is a top view of a multi-mode suspended channel waveguide 100. The waveguide 100 comprises a core 110, a cladding 120, an inverse taper 130, and a plurality of narrow sidebars 140. The core 110 extends longitudinally along an axis of optical signal propagation. The cladding 120 extends longitudinally adjacent to the core 110. The inverse taper 130 is enclosed in the core 110. The core 110 is constructed from an SiO₂ material. The core 110 comprises dimensions that support multiple modes (e.g., including higher-order modes) of optical signal propagation. The cladding 120 comprises air, which may be formed by etching trenches in the waveguide 100. The waveguide 100 is suspended in air supported by the plurality of narrow sidebars 140. The inverse taper 130 is an Si waveguide or a silicon nitride (SiN) waveguide. The waveguide 100 further comprises a first end 101 and a second end 102 opposite to the first end 101. The inverse taper 130 extends from the first end 101 towards the second end 102 for a portion of the waveguide 100. The inverse taper 130 comprises a first end 131, a second end 132 opposite to the first end 131, and a width that tapers in or narrows down from the first end 131 to the second end 132. The waveguide 100 may be employed as an optical mode converter. For example, the inverse taper 130 may be configured to couple to a highly confined Si waveguide at the first end 131 and the waveguide 100 may be configured to couple to an optical fiber (e.g., an SMF or a multi-mode fiber (MMF)) at the second end 102. When the inverse taper 130 receives an optical signal at the first end 131, the inverse taper 130 adiabatically reshapes the optical mode of the optical signal as the optical signal propagates along the waveguide 100. When the optical signal reaches the second end 132 of the inverse taper 130, the optical signal is guided by the core 110, which confines the optical signal with a larger optical mode. As such, the optical mode of the optical signal expands when the optical signal propagates along the core 110. Thus, when the optical signal reaches the second end 102 at which the optical fiber is coupled, the optical mode of the optical signal is matched to the optical fiber mode. Conversely, an optical signal may be received at the second end 102, for example, from an optical fiber, and the waveguide 100 reduces the optical mode of the optical signal as the optical signal propagates through the core 110 and transfers to the inverse taper 130. One advantage of employing the waveguide 100 as a mode converter or coupler is that the waveguide 100 may be fabricated by employing industry standard complementary metal-oxide semiconductor (CMOS) integrated circuit (IC) fabrication technologies and semiconductor materials.

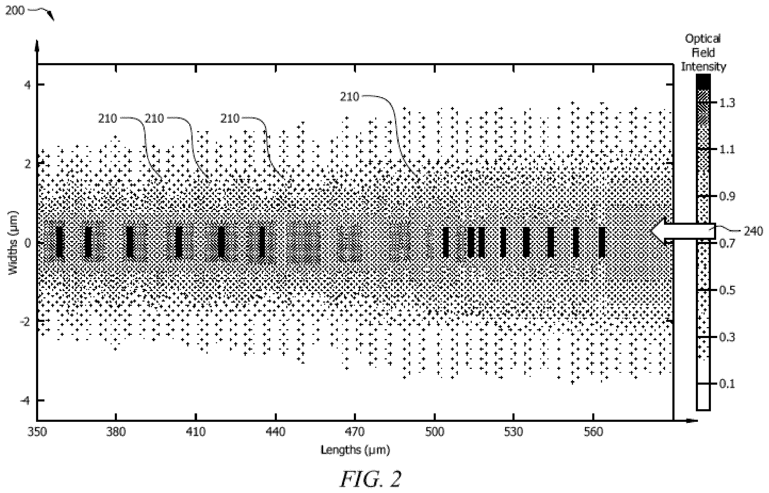

FIG. 2 is a graph 200 illustrating an optical field distribution of a multi-mode suspended channel waveguide. The waveguide is similar to the waveguide 100. For example, the waveguide comprises a buried inverse taper similar to the inverse taper 130 and the waveguide is suspended in air by sidebars similar to the sidebars 140. In graph 200, the x-axis represents longitudinal lengths of the waveguide along an axis of optical signal propagation in units of µm, the y-axis represents widths of the waveguide in units of µm, and the index of the graph 200 shows optical field intensity between about 0.1 to about 1.3. The graph 200 illustrates the optical field distribution of an optical signal injected into the waveguide from the right side of the graph 200, as shown by the arrow 240. For example, the right side of the graph 200 corresponds to the second end 102 of the waveguide 100 coupled to an optical fiber and the left side of the graph 200 corresponds to the first end 101 of the waveguide 100 coupled to a highly confined Si wire or waveguide. As shown, the optical mode of the optical signal contracts or reduces as the optical signal traverses along the waveguide from the right side to the left side. However, the optical field distribution shows an increasing amount of ripples 210 with increasing amplitudes from the right side to the left side of the graph 200 (e.g., as the optical signal traverses along the waveguide). The ripples 210 are caused by the sidebars breaking the translational symmetry of the waveguide and the support of multi-mode optical signal propagation by the waveguide. For example, when the optical signal passes by the side of the sidebars, the sidebars excites the higher-order modes. However, different modes propagate at different speeds, thus interfering with each other. As a result, the ripples 210 are formed near the positions of the sidebars. The interference and/or the ripples 210 degrades the performance of the waveguide.

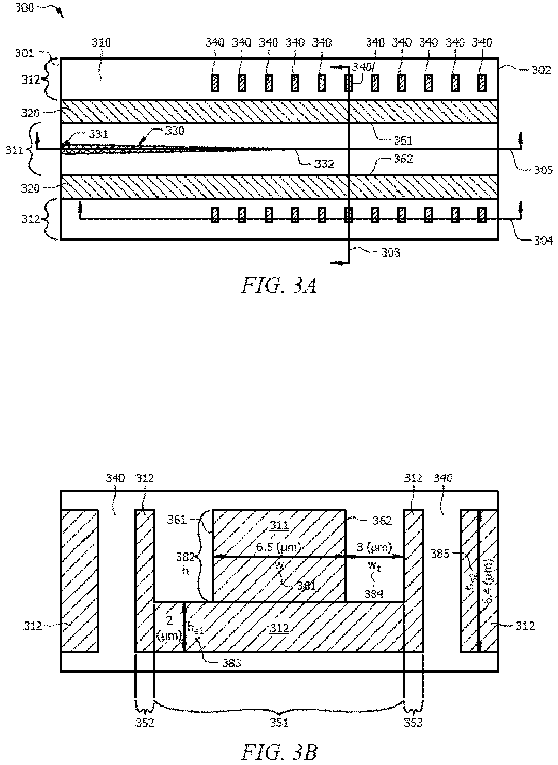

FIGS. 3A-D illustrate an embodiment of a single-mode suspended ridge waveguide 300. FIG. 3A is a top view of the single-mode ridge waveguide 300. The waveguide 300 comprises a core 310, an air cladding 320, and an inverse taper 330. For example, the core 310 may be constructed from a material (e.g., SiO₂) comprising a higher refractive index than the air cladding 320 and the inverse taper 330 may be constructed from a material (e.g., Si) comprising a higher refractive index than the core 310. The core 310 comprises a ridge 311 and a slab 312 that extends longitudinally along an axis of optical signal propagation, as shown by a line 305. The ridge 311 comprises a first longitudinal side 361 and a second longitudinal side 362 opposite to the first longitudinal side 361. The air cladding 320 extends longitudinally adjacent to the first longitudinal side 361 and the second longitudinal side 362 of the ridge 311. Since the refractive index of the ridge 311 (e.g., about 1.45 for SiO₂) is higher than the refractive index of the air cladding 320 (e.g., about 1), an optical signal that propagates along the waveguide 300 may be confined to the ridge 311. The dimensions and the structure of the ridge 311 and the slab 312 are designed to provide single-mode optical signal propagation, as discussed more fully below. The inverse taper 330 is disposed and/or buried within the ridge 311 of the core 310. The inverse taper 330 comprises a first end 331, a second end 332 opposite to the first end 331 along the axis of optical signal propagation, and a width that tapers in or narrows down from the first end 331 to the second end 332. For example, the inverse taper 330 is an inversely tapered Si waveguide. The inverse taper 330 extends from the first end 301 towards the second end 302 for at least a portion of the ridge 311. The inverse taper 330 is aligned with the ridge 311 and/or the core 310 along the axis of optical signal propagation. The waveguide 300 further comprises a plurality of air holes 340 so that the waveguide 300 may be suspended in air. For example, the air holes 340 may be generated by etching away some portions of the slab 312 via chemical processing. It should be noted that the air holes 340 are positioned in the slab 312 at a distance away from the air cladding 320 such that the air holes 340 may not interfere with an optical signal that propagates along the waveguide 300.

In an embodiment, the waveguide 300 is configured to couple between a highly-confined Si waveguide (e.g., an Si nanowire) and an optical fiber (e.g., an SMF). For example, the highly-confined Si waveguide is coupled to the first end 331 of the inverse taper 330 and the optical fiber is coupled to the second end 302 of the waveguide 300. When the inverse taper 330 receives an optical signal at the first end 331, the inverse taper 330 adiabatically reshapes the optical mode of the optical signal as the optical signal propagates along the inverse taper 330 and gradually transfers the optical signal from the inverse taper 330 to the ridge 311 as the widths of the inverse taper 330 narrows, where the ridge 311 comprises a larger optical mode. When the optical signal reaches the second end 302 of the waveguide 300, the optical signal comprises an optical mode that is compatible with an optical fiber mode. As such, the waveguide 300 may operate as an optical mode converter. In some embodiments, the waveguide 300 may be disposed on a silicon photonics chip at a position near an edge of the silicon photonics chip to provide optical input and/or output coupling between an optical fiber and the silicon photonic chip.

FIG. 3B is a cross-sectional view of the single-mode ridge waveguide 300 taken along a line 303 of FIG. 3A as viewed in the direction indicated by the arrows. As shown, the core 310 comprises the ridge 311 disposed on a surface of the slab 312. The slab 312 comprises a base portion 351, a first step-up portion 352, and a second step-up portion 353. The ridge 311, the base portion 351, and the step-up portion 352 extend longitudinally along the axis of optical signal propagation. The ridge 311 is disposed at about a middle portion of the base portion 351. The first step-up portion 352 is raised up from the base portion 351 at a distance 384, denoted as wₜ, away from the first side 361 of the ridge 311. Similarly, the second step-up portion 352 is raised up from the base portion 351 at a distance (e.g., similar to the distance 384) away from the second side 362 of the ridge 311. The air holes 340 are positioned within the first step-up portion 352 and the second step-up portion 353 of the slab 312 along the axis of optical signal propagation.

As shown, the ridge 311 comprises a width 381, denoted as w, of about 6.5 µm and a height 382, denoted as h, of about 4.4 µm. The base portion 351 of the slab 312 comprises a height 383, denoted as hₛ₁, of about 2 µm. The second step-up portion 353 of the slab 312 comprises a height 385, denoted as hₛ₂, that is raised back up to about 6.4 µm. The separation distance 384 between the second side 362 of the ridge 311 and the second step-up portion 353 is about 3 µm. The first step-up portion 352 comprises similar dimensions as the second step-up portion 353 and is positioned similarly as the second step-up portion 353 with respect to the ridge 311. It should be noted that the dimensions of the structure of the core 310 determines the optical propagation properties of the waveguide 300. For example, the dimensions described above are selected to provide single-mode optical signal propagation with a wavelength of about 1 µm to about 2 µm. For example, a waveguide, such as the waveguide 300, may support two polarizations, a TE mode in a horizontal direction and a TM mode in a vertical direction. When an optical signal is guided by a single-mode waveguide, a single TE mode and a single TM mode of the optical signal may propagate through the waveguide. As such, when the waveguide 300 is designed to provide single-mode optical signal propagation, no higher-order modes excitations may occur, which may reduce optical interference and increase coupling efficiency. In addition, the ridge 311 and the first step-up portion 352 of the slab 312 are designed to be separated by a sufficient amount of distance (e.g., greater than about 1 µm) to avoid optical couplings and/or interferences from the slab 312.

Although specific values are provided above, any suitable values may be used in accordance with the wavelength of the optical signal in operation. For example, when the wavelength in operation is at least about 1 µm to about 2.5 µm, the height 382 may range from 2 µm to 15 µm, the height 383 may range from 0.5 µm to 10 µm, the width 361 may range from 2 µm to 15 µm, and the distance 384 may be greater than 1 µm. It should be noted various combinations of the dimensions described may be employed for the ridge 311 and the slab 312. However, in order to maintain single-mode for both TE and TM polarizations, the ridge 311 and the slab 312 may comprise a vertical height ratio in a range between about 1.5 to about 5.

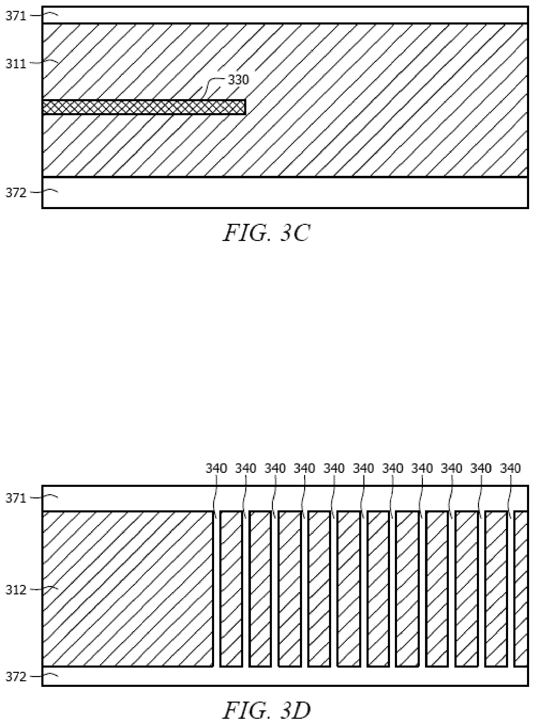

FIG. 3C is a cross-sectional view of an embodiment of a single-mode ridge waveguide 300 taken along the line 305 of FIG. 3A as viewed in the direction indicated by the arrows across the ridge 311. As shown, the inverse taper 330 is embedded within the ridge 311 and extends for at least a portion of the ridge 311. The ridge 311 is positioned between a first layer 371 of air and a second layer 372 of air. The first layer 371 of air may correspond to a top surface (e.g., corresponding to the top view shown in FIG. 3A) of the ridge 311 exposed to air. The second layer 372 of air may correspond to undercut in the slab 312, as described more fully below.

FIG. 3D is a cross-sectional view of another embodiment of a single-mode ridge waveguide 300 taken along a line 304 of FIG. 3A as viewed in the direction indicated by the arrows across the slab 312. As shown, the slab 312 is positioned between a first layer 371 of air and a second layer 372 of air. In addition, the slab 312 comprises the air holes 340 as described above.

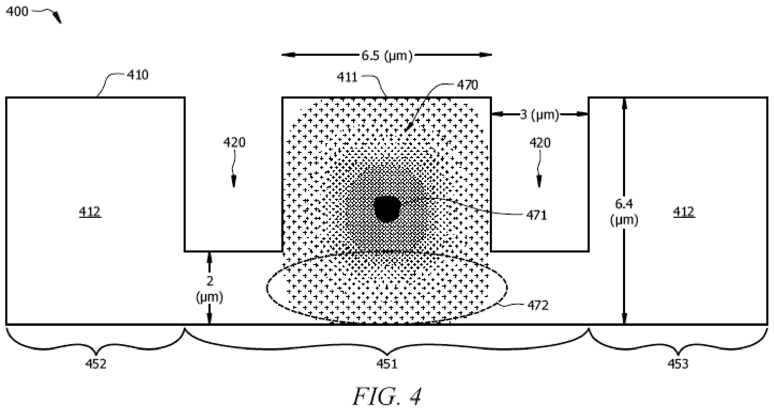

FIG. 4 is a cross-sectional view of an embodiment illustrating an optical field distribution 470 of a single-mode ridge waveguide 400. The waveguide 400 is similar to the waveguide 300. The cross-sectional view corresponds to a cross-sectional area taken along the line 303 of FIG. 3A as viewed in the direction indicated by the arrows. The cross-sectional view is similar to the cross-sectional view shown in FIG. 3B and additionally illustrates the optical field distribution 470 when an optical signal is injected into the waveguide 400. For example, the waveguide 400 comprises a core 410 and air cladding 420 engaging a portion of the core 410. The core 410 is similar to core 310 and the air cladding 420 is similar to the air cladding 320. The core 410 comprises a ridge 411 disposed on a slab 412, where the ridge 411 is similar to the ridge 311 and the slab is similar to the slab 312. In addition, the ridge 411 and the slab 412 are configured with similar design parameters or dimensions as the ridge 311 and the slab 312. For example, the ridge 411 comprises a height of about 6.5 µm and a width of about 6.5 µm. The slab 412 comprises a base portion 451 similar to the base portion 351 with a height of about 2 µm and step-up portions 452 and 453 similar to the step-up portions 352 and 353, each with a height of about 6.4 µm. Each of the step-up portions 452 and 453 is raised up from the base portion 451 at a distance of about 3 µm away from the edge of the ridge 411. Thus, the waveguide 400 supports single-mode propagation. As shown, the optical field distribution 470 is centered at about the ridge 411, where the intensity is the highest at the center 471 and only a very small amount of the optical field (shown as 472) is leaked into the slab 412. In contrast to the waveguide 100, the waveguide 400 supports single-mode optical signal propagation instead of multi-mode optical signal propagation, thus the waveguide 400 may not comprise the higher-order modes effect and/or interference as in the waveguide 100. In addition, since the ridge 411 is positioned on a slab 412, the waveguide 400 may not require the mechanical support of sidebars as in the waveguide 100. As such, the waveguide 400 may not comprise the optical mode perturbations caused by the sidebars as in the waveguide 100. Thus, the waveguide 400 may provide more efficient coupling and higher performance than the waveguide 100.

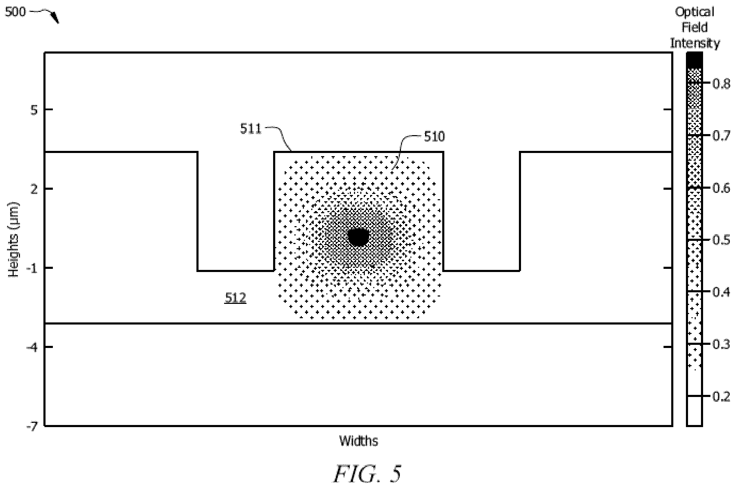

FIG. 5 is a graph 500 illustrating an embodiment of a cross-sectional view of an E-field distribution 510 of a single-mode suspended ridge waveguide, such as the waveguides 300 and 400, in a TE mode. In the graph 500, the x-axis represents widths of the waveguide, the y-axis represents heights of the waveguide in units of µm, and the index of the graph 500 shows optical field intensity between about 0.2 to about 0.8. The E-field distribution 510 represents the E-field distribution at a cross section of the waveguide, for example, taken along the line 303 of FIG. 3A, which may be similar to the cross-sectional views shown in FIG. 3B and FIG. 4. As shown, the E-field distribution 510 in the TE mode is centered at about the ridge portion (shown as 511) of the waveguide with minimal leakage into the slab portion (shown as 512) of the waveguide.

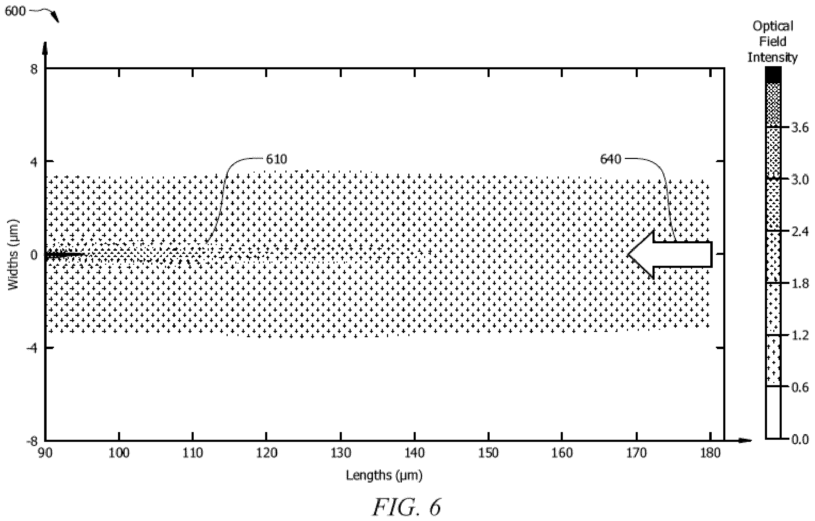

FIG. 6 is a graph 600 illustrating an embodiment of a top-view of an E-field distribution 610 of a single-mode suspended ridge waveguide, such as the waveguides 300 and 400, in a TE mode. In the graph 600, the x-axis represents longitudinal lengths of the waveguide in units of µm, the y-axis represents the widths of the waveguide in units of µm, and the index of the graph 600 shows optical field intensity between about 0.0 to about 3.6. The E-field distribution 610 represents the E-field distribution across a top surface of the waveguide, for example, similar to the top view of the waveguide 300 shown in FIG. 3A, in the TE mode. For example, the E-field distribution 610 corresponds to an optical signal coupled into the waveguide from the right side of the graph 600, as shown by the arrow 640. As shown, the E-field distribution 610 in the TE mode transitions the optical mode of the optical signal smoothly as the optical signal traverse along the waveguide from the right side to the left side of the graph 600. By comparing the graphs 600 and 200, the E-field distribution 610 does not comprise the ripple or interference effect as shown in the optical field distribution 210. The absence of the ripple effect is a result of employing a single-mode waveguide instead of a multi-mode waveguide and suspending the waveguide via undercuts, for example, to include the air holes 340 in the waveguide 300, instead of employing sidebars such as the sidebars 140 to support the waveguide. Thus, the waveguide may couple the TE mode efficiently.

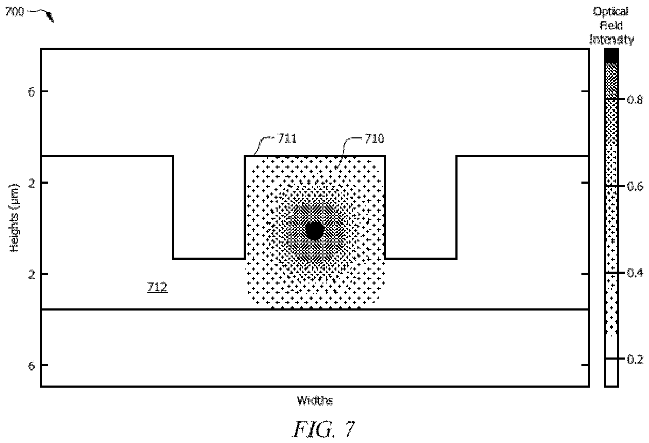

FIG. 7 is a graph 700 illustrating an embodiment of a cross-sectional view of an E-field distribution 710 of a single-mode suspended ridge waveguide, such as the waveguides 300 and 400, in TM mode. In the graph 700, the x-axis represents widths of the waveguide, the y-axis represents heights of the waveguide in units of µm, and the index of the graph 700 shows optical field intensity between about 0.2 to about 0.8. The E-field distribution 710 represents the E-field distribution of a cross section of the waveguide, for example, taken along the line 303 of FIG. 3A, which may be similar to the cross-sectional views shown in FIG. 3B and FIG. 4. For example, the E-field distribution 710 corresponds to the E-field distribution 510, but in the TM mode instead of in the TE mode as in the E-field distribution 510. As shown, the E-field distribution 710 in the TM mode is centered at about the ridge portion (shown as 711) of the waveguide with minimal leakage into the slab portion (shown as 712) of the waveguide.

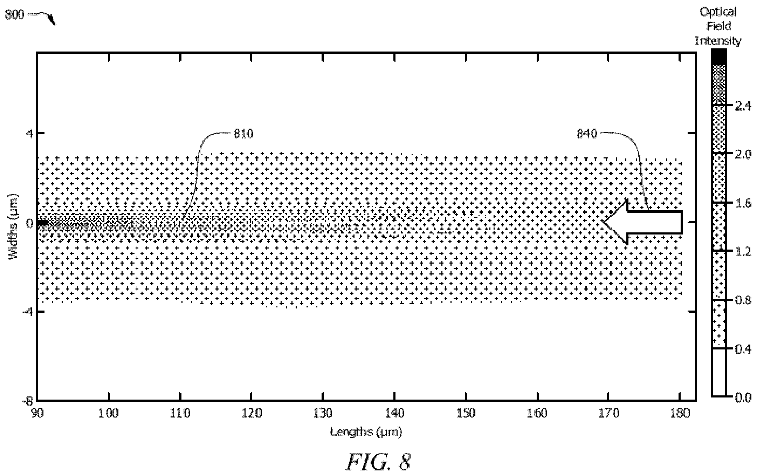

FIG. 8 is a graph 800 illustrating an embodiment of a top-view of an E-field distribution 810 of a single-mode suspended ridge waveguide, such as the waveguides 300 and 400, in TM mode. In the graph 800, the x-axis represents longitudinal lengths of the waveguide in µm, the y-axis represents widths of the waveguide in units of µm, and the index of the graph 800 shows optical field intensity between about 0.0 to about 2.4. The E-field distribution 810 represents the E-field distribution across a top surface of the waveguide, for example, similar to the top view of the waveguide 300 shown in FIG. 3A in the TM mode. For example, the E-field distribution 810 corresponds to an optical signal coupled into the waveguide from the right side of the graph 800, as shown by the arrow 840. For example, the E-field distribution 810 corresponds to the E-field distribution 610, but in the TM mode instead of in the TE mode as in the E-field distribution 610. As shown, the E-field distribution 810 in the TM mode transitions the optical mode of the optical signal smoothly as the optical signal traverse along the waveguide from the right side to the left side of the graph 800. By comparing the graphs 800 and 200, the E-field distribution 810 does not comprise the ripple effect or the interference effect as shown in the optical field distribution 210. The ripple effect is removed by employing a single-mode waveguide and suspending the waveguide without the employment of sidebars, such as the sidebars 140. Thus, the waveguide may couple the TM mode efficiently.

As shown above in FIGS. 5-8, the disclosed single-mode suspended ridge waveguide, such as the waveguide 300 and 400, provide higher performance with more efficient coupling when compared to a multi-mode suspended channel mode waveguide, such as the waveguide 100. For example, the disclosed single-mode suspended ridge waveguide may provide a coupling loss of less than about 3 decibels (dB) for both the TE mode and the TM mode. The improvements are the results of employing single-mode optical signal propagation through appropriate design parameters as described above and suspending the waveguide via etching to create air cavities, such as the air holes 340, in a slab, such as the slabs 312 and 412, far away from a ridge, such as the ridges 311 and 411.

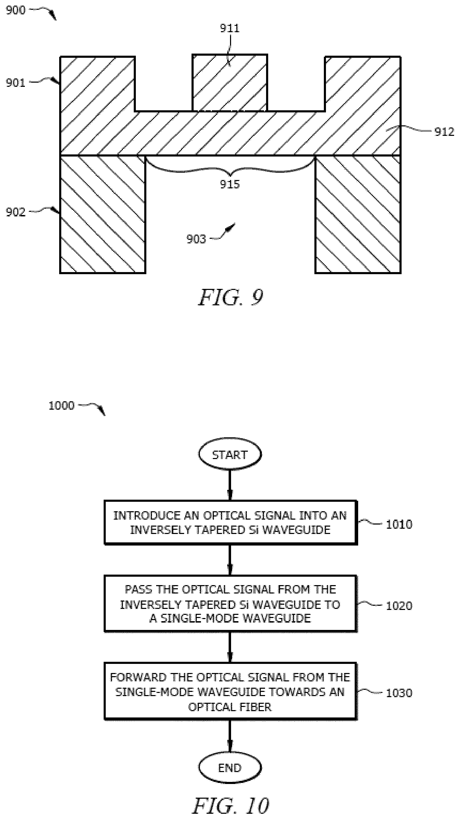

FIG. 9 is a cross-sectional view of an embodiment of an optical device 900 comprising a single-mode suspended ridge waveguide 901 disposed on a substrate platform 902. The waveguide 901 is to the waveguides 300 and 400. The substrate platform 902 is constructed from an Si material. The waveguide 901 is constructed from an SiO₂ material similar to the waveguides 300 and 400. The waveguide 901 comprises a ridge 911 similar to the ridges 311 and 411 disposed on a slab 912 similar to the slabs 312 and 412. The cross-sectional view corresponds to a cross-sectional area taken along the line 303 of FIG. 3A when the waveguide 300 is disposed on a substrate similar to the substrate platform 902. In the device 900, the waveguide 901 is suspended in air by etching away a portion 903 of the substrate platform 902 beneath the waveguide 901. For example, the etching may be performed from the backside of the substrate platform 902. As such, the waveguide 901 may not comprise holes, such as the holes 340, along the slab 912. In addition, the waveguide 901 may comprise a narrower suspended portion 915 than the suspended portions of the waveguides 300 and 400.

FIG. 10 is a flowchart of an embodiment of an optical edge coupling method 1000. The method 1000 is implemented by a single-mode suspended ridge single-mode waveguide, such as the waveguides 300, 400, and 901. The method 1000 is implemented when the waveguide is employed as an optical mode converter. For example, the optical mode converter may be disposed on a silicon photonics chip as shown in the device 900. At step 1010, an optical signal is introduced into an inversely tapered Si waveguide, such as the inverse tapers 330. For example, the inversely tapered Si waveguide is disposed within a core, such as the cores 310 and 410, of the single-mode waveguide and the core is surrounded by an air cladding, such as the air cladding 320 and 420. At step 1020, the optical signal is passed from the inversely tapered Si waveguide to the single-mode
waveguide, for example, along the core. For example, the core of the single-mode waveguide comprises a larger optical mode size than the inversely tapered Si waveguide such that an optical mode conversion may be achieved when the optical signal is passed from a tip, such as the second end 332, of the inversely tapered Si waveguide into the larger mode single-mode waveguide. At step 1030, the optical signal is forwarded from the single-mode waveguide towards an optical fiber, such as an SMF. When the optical signal reaches the optical fiber, the optical mode of the optical signal is compatible with the optical mode size of the optical fiber.

While several embodiments have been provided in the present disclosure, it should be understood that the disclosed systems and methods might be embodied in many other specific forms without departing from the scope of the present disclosure. The present examples are to be considered as illustrative and not restrictive, and the intention is not to be limited to the details given herein. For example, the various elements or components may be combined or integrated in another system or certain features may be omitted, or not implemented.

In addition, techniques, systems, subsystems, and methods described and illustrated in the various embodiments as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component whether electrically, mechanically, or otherwise. Other examples of changes, substitutions, and alterations are ascertainable by one skilled in the art and could be made without departing from the scope disclosed herein.

## Claims

1. A single-mode suspended waveguide comprising:
an optical core (310) configured to couple an optical signal between an inverse taper (330) and an optical fiber, wherein the core extends longitudinally along an axis of optical signal propagation between the inverse taper (330) and the optical fiber, wherein the refractive index of the inverse taper (330) is higher than that of the optical core (310);
the core further comprises a slab (312) and a ridge (311) disposed on the slab (312), the slab (312) comprises a base portion (351) positioned between two step-up portion s (352, 353) wherein the ridge is disposed at about a center location of the base portion and wherein the ridge (311) and the step-up portions (352, 353) are separated by a sufficient amount of distance to avoid optical coupling via the slab (312), wherein the base portion (351), the step-up portions (352) and the ridge (311) extend along the axis of optical signal propagation;
wherein the base portion (351) comprises a first height measured from the bottom of the base portion, the ridge comprises a third height measured from the bottom of the base portion, a ratio between the third height and the first height is about 1.5 to about 5, the step-up portions (352, 353) comprise a second height measured from the bottom of the base portion that is greater than the first height; and
an air cladding (320) disposed adjacent to the core along the axis of optical signal propagation.

2. The waveguide of claim 1, wherein the ridge (311) is disposed at about a middle portion of the base portion (351), wherein the ridge (311) comprises the third height that is about equal to a second height of the step-up portion (352), wherein the base portion (351) comprises a width that is greater than a width of the ridge such that a portion of the air cladding (320) is disposed between the ridge (311) and the step-up portion (352), and wherein the portion of the air cladding (320) comprises a width that is greater than 1 micrometer (µm).

3. The waveguide of claim 1, wherein the slab (312) comprises undercut air holes positioned in the step-up portions (352) along the axis of optical signal propagation, and wherein the undercut air holes extend vertically through the step-up portion (352) of the slab (312).

4. The waveguide of claim 1, wherein the slab (312) comprises undercut air holes positioned in the base portion (351) along the axis of optical signal propagation.

5. The waveguide of claim 1, wherein the inverse taper (330) extends longitudinally along the axis of optical signal propagation within at least a portion of the core (310), and wherein the inverse taper (330) comprises a silicon (Si) material.

6. A method comprising:
introducing an optical signal into an inversely tapered silicon (Si) waveguide;
passing the optical signal from the inversely tapered Si waveguide to a single-mode suspended waveguide comprising a core and an air cladding surrounding the core; and
forwarding the optical signal from the single-mode suspended waveguide towards an optical fiber,
wherein the single-mode suspended waveguide comprises a larger optical mode than the inversely tapered Si waveguide, and
wherein the optical mode of the single-mode waveguide is compatible with an optical mode of the optical fiber;
the core further comprises a slab (312) and a ridge (311) disposed on the slab (312),
the slab (312) comprises a base portion (351) positioned between two step-up portions (352) wherein the ridge (311) is disposed at about a center location of the base portion and wherein the ridge and the step-up portions (352) are separated by a sufficient amount of distance to avoid optical coupling via the slab (312), wherein the base portion (351) comprises a first height measured from the bottom of the base portion, the ridge comprises a third height measured from the bottom of the base portion, a ratio between the third height and the first height is about 1.5 to about 5, the step-up portion (352) comprises a second height measured from the bottom of the base portion that is greater than the first height.

7. The method of claim 6, wherein the ridge and the slab extend in a direction along an optical path of the optical signal, wherein the optical signal propagates along the ridge, and wherein the ridge is surrounded by the air cladding; and wherein the slab further comprises air holes in the step-up portions, the base portion, or combinations thereof.

8. An optical device, comprising:
a substrate (902);
a single-mode suspended waveguide (901) disposed on the substrate (902), wherein the single-mode suspended waveguide (901) comprises a core (310) and an air cladding (320) surrounding the core (310), wherein the single-mode suspended waveguide (901) comprises a first end and a second end opposite to the first end along an axis of optical signal propagation, and wherein the first end is configured to couple to a single-mode fiber (SMF); and
an inverse taper (330) disposed within a portion of the core (310) of the single-mode suspended waveguide (901), wherein the inverse taper (330) extends from the second end toward the first end with decreasing widths, and wherein the inverse taper (330) is aligned with the single-mode suspended waveguide (901) along the axis of optical signal propagation to provide an optical path between the inverse taper (330) and the optical fiber, refractive index of the inverse taper (330) is higher than the optical core (310);
wherein the core further comprises a slab (312) and a ridge (311) disposed on the slab (312), the slab (312) comprises a base portion (352) positioned between two step-up portions, wherein the ridge is disposed at about a center location of the base portion and
wherein the ridge (311) and the step-up portion (352) are separated by a sufficient amount of distance to avoid optical coupling via the slab (312), wherein the base portion (351), the step-up portion (352) and the ridge (311) extend along the axis of optical signal propagation;
wherein the base portion (351) comprises a first height measured from the bottom of the base portion, the ridge comprises a third height measured from the bottom of the base portion, a ratio between the third height and the first height is about 1.5 to about 5, the step-up portion (352) comprises a second measured from the bottom of the base portion height that is greater than the first height.

9. The optical device of claim 8, wherein the ridge (311) is disposed at about a middle portion of the base portion (351), and wherein the ridge (311) and the step-up portion (352) are separated by the air cladding (320).

10. The optical device of claim 8 or 9, wherein the slab (312) comprises a plurality of air cavities in the step-up portions along the axis of optical signal propagation, the base portion along the axis of optical signal propagation, or combinations thereof.

11. The optical device of any one of claims 8-10, wherein at least a portion of the substrate (902) adjacent to the single-mode waveguide (901) is etched away to suspend the single-mode waveguide in air.

12. The optical device of any one of claims 8-11, wherein the substrate (902) comprises a silicon (Si) material, wherein the single-mode waveguide (901) comprises a silicon dioxide (SiO2) material, and wherein the inverse taper (330) comprises a silicon (Si) material.

## Patentansprüche

1. Suspendierter Einmodenwellenleiter, umfassend:
einen optischen Kern (310), der konfiguriert ist, um ein optisches Signal zwischen einem inversen Kegel (330) und einer optischen Faser zu koppeln, wobei sich der Kern in Längsrichtung entlang einer Achse der Ausbreitung eines optischen Signals zwischen dem inversen Kegel (330) und der optischen Faser erstreckt, wobei der Brechungsindex des inversen Kegels (330) höher als der des optischen Kerns (310) ist;
der Kern ferner eine Platte (312) und eine Rippe (311) umfasst, die auf der Platte (312) angeordnet ist, wobei die Platte (312) einen Basisabschnitt (351) umfasst, der zwischen zwei Anstiegsabschnitten (352, 353) positioniert ist, wobei die Rippe an etwa einer zentralen Stelle des Basisabschnitts angeordnet ist und wobei die Rippe (311) und die Anstiegsabschnitte (352, 353) mittels einer ausreichenden Menge von Abstand getrennt sind, um ein optisches Koppeln über die Platte (312) zu vermeiden, wobei sich der Basisabschnitt (351), die Anstiegsabschnitte (352) und die Rippe (311) entlang der Achse der Ausbreitung des optischen Signals erstrecken;
wobei der Basisabschnitt (351) eine von dem Boden des Basisabschnitts gemessene erste Höhe umfasst, die Rippe eine von dem Boden des Basisabschnitts gemessene dritte Höhe umfasst, ein Verhältnis zwischen der dritten Höhe und der ersten Höhe etwa 1,5 bis etwa 5 beträgt, die Anstiegsabschnitte (352, 353) eine zweite Höhe gemessen von der Boden des Basisabschnitts umfassen, die über der ersten Höhe liegt; und
eine Luftummantelung (320), die angrenzend an den Kern entlang der Achse der Ausbreitung des optischen Signals angeordnet ist.

2. Wellenleiter nach Anspruch 1, wobei die Rippe (311) etwa an einem mittleren Abschnitt des Basisabschnitts (351) angeordnet ist, wobei die Rippe (311) die dritte Höhe umfasst, die etwa gleich einer zweiten Höhe des Anstiegsabschnitts (352) ist, wobei der Basisabschnitt (351) eine Breite umfasst, die über einer Breite der Rippe liegt, derart, dass ein Abschnitt der Luftummantelung (320) zwischen der Rippe (311) und dem Anstiegsabschnitt (352) angeordnet ist, und wobei der Abschnitt der Luftummantelung (320) eine Breite umfasst, die über 1 Mikrometer (µm) liegt.

3. Wellenleiter nach Anspruch 1, wobei die Platte (312) eingeschnittene Luftlöcher umfasst, die in den Anstiegsabschnitten (352) entlang der Achse der Ausbreitung des optischen Signals positioniert sind, und wobei sich die eingeschnittenen Luftlöcher vertikal durch den Anstiegsabschnitt (352) der Platte (312) erstrecken.

4. Wellenleiter nach Anspruch 1, wobei die Platte (312) eingeschnittene Luftlöcher umfasst, die in dem Basisabschnitt (351) entlang der Achse der Ausbreitung des optischen Signals positioniert sind.

5. Wellenleiter nach Anspruch 1, wobei sich der inverse Kegel (330) in Längsrichtung entlang der Achse der Ausbreitung des optischen Signals innerhalb mindestens eines Abschnitts des Kerns (310) erstreckt, und wobei der inverse Kegel (330) ein Silizium (Si)-Material umfasst.

6. Verfahren, umfassend:
Einführen eines optischen Signals in einen invers kegelförmigen Silizium (Si)-Wellenleiter;
Führen des optischen Signals von dem invers kegelförmigen Si-Wellenleiter zu einem suspendierten Einmodenwellenleiter, der einen Kern und eine den Kern umgebende Luftummantelung umfasst; und
Weiterleiten des optischen Signals von dem suspendierten Einmodenwellenleiter zu einer optischen Faser hin,
wobei der suspendierte Einmodenwellenleiter einen größeren optischen Modus als der invers kegelförmige Si-Wellenleiter umfasst, und
wobei der optische Modus des Einmodenwellenleiters mit einem optischen Modus der optischen Faser kompatibel ist;
der Kern ferner eine Platte (312) und eine Rippe (311) umfasst, die auf der Platte (312) angeordnet ist,
die Platte (312) einen Basisabschnitt (351) umfasst, der zwischen zwei Anstiegsabschnitten (352) positioniert ist, wobei die Rippe (311) etwa an einer zentralen Stelle des Basisabschnitts angeordnet ist und wobei die Rippe und die Anstiegsabschnitte (352) mittels einer ausreichenden Menge von Abstand getrennt sind, um ein optisches Koppeln über die Platte (312) zu vermeiden, wobei der Basisabschnitt (351) eine von dem Boden des Basisabschnitts gemessene erste Höhe umfasst, wobei die Rippe eine von dem Boden des Basisabschnitts gemessene dritte Höhe umfasst, ein Verhältnis zwischen der dritten Höhe und der ersten Höhe etwa 1,5 bis etwa 5 beträgt, der Anstiegsabschnitt (352) eine von dem Boden des Basisabschnitts gemessene zweite Höhe umfasst, die über der ersten Höhe liegt.

7. Verfahren nach Anspruch 6, wobei sich die Rippe und die Platte in einer Richtung entlang eines optischen Pfads des optischen Signals erstrecken, wobei sich das optische Signal entlang der Rippe ausbreitet, und wobei die Rippe mittels der Luftummantelung umgeben ist;
und wobei die Platte ferner Luftlöcher in den Anstiegsabschnitten, dem Basisabschnitt oder Kombinationen davon umfasst.

8. Optische Vorrichtung, umfassend:
ein Substrat (902);
einen suspendierten Einmodenwellenleiter (901), der auf dem Substrat (902) angeordnet ist, wobei der suspendierte Einmodenwellenleiter (901) einen Kern (310) und eine den Kern (310) umgebende Luftummantelung (320) umfasst, wobei der suspendierte Einmodenwellenleiter (901) ein erstes Ende und ein zweites Ende gegenüber dem ersten Ende entlang einer Achse der Ausbreitung des optischen Signals umfasst, und wobei das erste Ende konfiguriert ist, um an eine Einmodenfaser (single-mode fiber - SMF) zu koppeln; und
einen inversen Kegel (330), der innerhalb eines Abschnitts des Kerns (310) des suspendierten Einmodenwellenleiters (901) angeordnet ist, wobei sich der inverse Kegel (330) von dem zweiten Ende zu dem ersten Ende hin mit abnehmenden Breiten erstreckt, und wobei der inverse Kegel (330) mit dem suspendierten Einmodenwellenleiter (901) entlang der Achse der Ausbreitung des optischen Signals ausgerichtet ist, um einen optischen Pfad zwischen dem inversen Kegel (330) und der optischen Faser bereitzustellen, wobei der Brechungsindex des inversen Kegels (330) höher als der optische Kern (310) ist;
wobei der Kern ferner eine Platte (312) und einen Rippe (311) umfasst, die auf der Platte (312) angeordnet ist, wobei die Platte (312) einen Basisabschnitt (351), der zwischen zwei Anstiegsabschnitten positioniert ist, umfasst, wobei die Rippe an etwa einer zentralen Stelle des Basisabschnitts angeordnet ist, und wobei die Rippe (311) und der Anstiegsabschnitt (352) mittels einer ausreichenden Menge von Abstand getrennt sind, um ein optisches Koppeln über die Platte (312) zu vermeiden, wobei sich der Basisabschnitt (351), der Anstiegsabschnitt (352) und die Rippe (311) entlang der Achse der Ausbreitung des optischen Signals erstrecken;
wobei der Basisabschnitt (351) eine von dem Boden des Basisabschnitts gemessene erste Höhe umfasst, die Rippe eine von dem Boden des Basisabschnitts gemessene dritte Höhe umfasst, ein Verhältnis zwischen der dritten Höhe und der ersten Höhe etwa 1,5 bis etwa 5 beträgt, der Anstiegsabschnitt (352) eine zweite, von dem Boden des Basisabschnitts gemessene Höhe, die über der ersten Höhe liegt, umfasst.

9. Optische Vorrichtung nach Anspruch 8, wobei die Rippe (311) etwa an einem Mittelabschnitt des Basisabschnitts (351) angeordnet ist und wobei der Rippe (311) und der Anstiegsabschnitt (352) mittels der Luftummantelung (320) getrennt sind.

10. Optische Vorrichtung nach Anspruch 8 oder 9, wobei die Platte (312) eine Vielzahl von Luftkavitäten in den Anstiegsabschnitten entlang der Achse der Ausbreitung des optischen Signals, dem Basisabschnitt entlang der Achse der Ausbreitung des optischen Signals oder Kombinationen davon umfasst.

11. Optische Vorrichtung nach einem der Ansprüche 8 bis 10, wobei mindestens ein Abschnitt des Substrats (902) angrenzend an den Einmodenwellenleiter (901) weggeätzt wird, um den Einmodenwellenleiter in Luft zu suspendieren.

12. Optische Vorrichtung nach einem der Ansprüche 8 bis 11, wobei das Substrat (902) ein Silizium (Si)-Material umfasst, wobei der Einmodenwellenleiter (901) ein Siliziumdioxid (SiO2)-Material umfasst und wobei der inverse Kegel (330) ein Silizium (Si)-Material umfasst.

## Revendications

1. Guide d'ondes suspendu monomode comprenant :
un cœur optique (310) configuré pour coupler un signal optique entre une conicité inverse (330) et une fibre optique, le cœur s'étendant de manière longitudinale le long d'un axe de propagation de signal optique entre la conicité inverse (330) et la fibre optique, dans lequel le l'indice de réfraction de la conicité inverse (330) est supérieur à celui du cœur optique (310) ;
le cœur comprend en outre une dalle (312) et une arête (311) disposée sur la dalle (312), la dalle (312) comprend une partie de base (351) positionnée entre deux parties élévatrices (352, 353) dans laquelle l'arête est disposée à peu près à un emplacement central de la partie de base et dans laquelle l'arête (311) et les parties élévatrices (352, 353) sont séparées par une distance suffisante pour éviter un couplage optique par l'intermédiaire de la dalle (312), la partie de base (351), les parties élévatrices (352) et l'arête (311) s'étendant le long de l'axe de propagation de signal optique ;
dans lequel la partie de base (351) comprend une première hauteur mesurée à partir du bas de la partie de base, l'arête comprend une troisième hauteur mesurée à partir du bas de la partie de base, un rapport entre la troisième hauteur et la première hauteur est d'environ 1,5 à environ 5, les parties élévatrices (352, 353) comprennent une deuxième hauteur mesurée à partir du bas de la partie de base qui est supérieure à la première hauteur ; et
une gaine d'air (320) disposée de manière adjacente au cœur le long de l'axe de propagation de signal optique.

2. Guide d'ondes selon la revendication 1, dans lequel l'arête (311) est disposée à environ une partie médiane de la partie de base (351), dans lequel l'arête (311) comprend la troisième hauteur qui est à peu près égale à une deuxième hauteur de la partie élévatrice (352), la partie de base (351) comprenant une largeur qui est supérieure à une largeur de l'arête de telle sorte qu'une partie de la gaine d'air (320) est disposée entre l'arête (311) et la partie élévatrice (352), et la partie de la gaine d'air (320) comprenant une largeur qui est supérieure à 1 micromètre (µm).

3. Guide d'ondes selon la revendication 1, dans lequel la dalle (312) comprend des trous d'air en contre-dépouille positionnés dans les parties élévatrices (352) le long de l'axe de propagation de signal optique, et dans lequel les trous d'air en contre-dépouille s'étendent verticalement à travers la partie élévatrice (352) de la dalle (312).

4. Guide d'ondes selon la revendication 1, dans lequel la dalle (312) comprend des trous d'air en contre-dépouille positionnés dans la partie de base (351) le long de l'axe de propagation de signal optique.

5. Guide d'ondes selon la revendication 1, dans lequel la conicité inverse (330) s'étend de manière longitudinale le long de l'axe de propagation de signal optique à l'intérieur d'au moins une partie du cœur (310), et dans lequel la conicité inverse (330) comprend un matériau en silicium (Si).

6. Procédé comprenant :
l'introduction d'un signal optique dans un guide d'ondes en silicium (Si) inversement conique ;
le passage du signal optique du guide d'ondes Si inversement conique à un guide d'ondes suspendu monomode comprenant un cœur et une gaine d'air entourant le cœur ; et
l'émission du signal optique du guide d'ondes suspendu monomode vers une fibre optique,
dans lequel le guide d'ondes suspendu monomode comprend un mode optique plus grand que le guide d'ondes en Si inversement conique, et
dans lequel le mode optique du guide d'ondes monomode est compatible avec un mode optique de la fibre optique ;
le cœur comprend en outre une dalle (312) et une arête (311) disposée sur la dalle (312),
la dalle (312) comprend une partie de base (351) positionnée entre deux parties élévatrices (352) dans laquelle l'arête (311) est disposée à peu près à un emplacement central de la partie de base et dans laquelle les parties élévatrices et/ou les parties élévatrices (352) sont séparés par une distance suffisante pour éviter un couplage optique par la dalle (312), la partie de base (351) comprenant une première hauteur mesurée à partir du bas de la partie de base, l'arête comprenant une troisième hauteur mesurée à partir du bas de la partie de base, un rapport entre la troisième hauteur et la première hauteur est d'environ 1,5 à environ 5, la partie élévatrice (352) comprend une deuxième hauteur mesurée à partir du bas de la partie de base qui est supérieure à la première hauteur.

7. Procédé selon la revendication 6, dans lequel l'arête et la dalle s'étendent dans une direction le long d'un trajet optique du signal optique, dans lequel le signal optique se propage le long de l'arête, et dans lequel l'arête est entourée par la gaine d'air ;
et dans lequel la dalle comprend en outre des trous d'air dans les parties élévatrices, la partie de base ou des combinaisons de celles-ci.

8. Dispositif optique, comprenant :
un substrat (902) ;
un guide d'ondes suspendu monomode (901) disposé sur le substrat (902), le guide d'ondes suspendu monomode (901) comprenant un cœur (310) et une gaine d'air (320) entourant le cœur (310), dans lequel le guide d'ondes suspendu monomode (901) comprend une première extrémité et une seconde extrémité opposée à la première extrémité le long d'un axe de propagation de signal optique, et dans lequel la première extrémité est configurée pour se coupler à une fibre monomode (SMF) ; et
une conicité inverse (330) disposée à l'intérieur d'une partie du cœur (310) du guide d'ondes suspendu monomode (901), dans lequel le a conicité inverse (330) s'étend de la seconde extrémité vers la première extrémité avec des largeurs décroissantes, et dans lequel la conicité inverse (330) est alignée avec le guide d'ondes suspendu monomode (901) le long de l'axe de propagation de signal optique pour fournir un trajet optique entre la conicité inverse (330) et la fibre optique, l'indice de réfraction de la conicité inverse (330) est supérieur à celui du cœur optique (310) ;
dans lequel le cœur comprend en outre une dalle (312) et une arête (311) disposée sur la dalle (312), la dalle (312) comprend une partie de base (351) positionnée entre deux parties élévatrices, dans laquelle l'arête est disposée à environ un emplacement central de la partie de base et dans laquelle l'arête (311) et la partie élévatrice (352) sont séparées par une distance suffisante pour éviter un couplage optique par l'intermédiaire de la dalle (312), la partie de base (351), la partie élévatrice (352) et l'arête (311) s'étendant le long de l'axe de propagation de signal optique ;
dans lequel la partie de base (351) comprend une première hauteur mesurée à partir du bas de la partie de base, l'arête comprend une troisième hauteur mesurée à partir du bas de la partie de base, un rapport entre la troisième hauteur et la première hauteur est d'environ 1,5 à environ 5, la partie élévatrice (352) comprend une deuxième hauteur mesurée à partir du bas de la partie de base qui est supérieure à la première hauteur.

9. Dispositif optique selon la revendication 8, dans lequel l'arête (311) est disposée à environ une partie médiane de la partie de base (351), et dans lequel l'arête (311) et la partie élévatrice (352) sont séparées par la gaine d'air (320).

10. Dispositif optique selon la revendication 8 ou 9, dans lequel la dalle (312) comprend une pluralité de cavités d'air dans les parties élévatrices le long de l'axe de propagation de signal optique, la partie de base le long de l'axe de propagation de signal optique, ou des combinaisons de celles-ci.

11. Dispositif optique selon l'une quelconque des revendications 8 à 10, dans lequel au moins une partie du substrat (902) adjacente au guide d'ondes monomode (901) est gravée pour suspendre le guide d'ondes monomode dans l'air.

12. Dispositif optique selon l'une quelconque des revendications 8 à 11, dans lequel le substrat (902) comprend un matériau en silicium (Si), dans lequel le guide d'ondes monomode (901) comprend un matériau en dioxyde de silicium (SiO2), et dans lequel la dconicité inverse (330) comprend un matériau en silicium (Si).
